# EUROPEAN PATENT SPECIFICATION

(11) **EP 2 343 718 B1**
(45) Date of publication and mention of the grant of the patent: **09.11.2016**
(21) Application number: 11382001.3
(22) Date of filing: 05.01.2011
(51) Int. Cl.: H01H 19/02

(54) **Illuminable control device adapted to a control panel for a domestic appliance**
Aufhellbare, auf die Bedienkonsole eines Haushaltsgeräts angepasste Steuerungsvorrichtung
Dispositif de contrôle illuminable adapté au panneau de commande d'un appareil domestique

(30) Priority: 08.01.2010 ES 201030009
(43) Date of publication of application: 13.07.2011
(73) Proprietor: Fagor, S. Coop., 20500 Arrasate-Mondragon (ES)
(72) Inventor: Zubiate Gorosabel, Urtzi, 20550, ARETXABALETA (ES); Igual Navais, Ruben, 20200, BEASAIN (ES)
(74) Representative: Igartua, Ismael

(56) References cited:
- EP-A2- 0 976 972
- DE-A1- 19 654 651
- DE-A1-102006 014 839
- JP-A- 2001 060 125
- US-A1- 2006 227 528

## Description

### TECHNICAL FIELD

This invention relates to an illuminable control device adapted to a control panel for a domestic appliance.

### PRIOR ART

In the state of the art illuminable control devices adapted to the corresponding control panel of a domestic appliance, or any other electrical appliance, that enable a rotating control pad to be lit when necessary are known.

In general terms, known illuminable control devices comprise a substantially cylindrical control pad, lighting means to light the control pad, and guide means that guide the light emitted by the lighting means towards the control pad.

One of the problems associated with this type of control pad is the difficulty in achieving the homogeneous lighting of the control pad, and in obtaining a simple illuminable control device that can be assembled quickly on the corresponding control panel.

US 4,807,091 A1 describes an illuminable control device that comprises a cylindrical control pad, a ring filter that includes areas that allow light to pass through and areas that absorb light, a light source, and a light-conducting member that guides the light emitted by the source towards the cylindrical control pad. The ring filter is arranged between the light source and the light-conducting member, with the result that the arrangement of the areas that allow light to pass through and the areas that absorb light allow a more or less homogeneous distribution of the light throughout the light-conducting member.

US 7,399,098 B2 describes an illuminable control device that comprises a control pad, a light-emitting diode that is arranged either inside the control pad facing a light-guiding member or in the axis of the control device. The diode emits light to the inside of the control pad, with the result that the light that is incident on said control pad is reflected indirectly on the guide member, which transmits and diffuses said light. As a result, the light is guided towards the external surface of the guide member, which projects out in relation to the control pad, lighting the lower surface of the control pad.

EP00976972A2 discloses a rotary knob comprising a light source arranged in front of a first light-conducting element and a second light-conducting element fixed to the housing of the knob. The first light-conducting element ends with a circumferential part in a transparent housing part of the knob, which part has a scale visible from outside. The second conducting element is arranged between the scale and the circumferential part of the first light-conducting element and has a total reflection surface forming with its outer side an envelope of a truncated cone or dome, on which 90° prims are arranged in the manner of segments.

### BRIEF DISCLOSURE OF THE INVENTION

The object of this invention is to provide an illuminable control device adapted to a control panel for a domestic appliance, the control panel comprising at least one rotating control pad.

The illuminable control device according to the invention comprises lighting means that comprise at least one light source to light the control pad and guide means to guide the light emitted by the lighting means towards the control pad.

The guide means comprise a guide member that includes at least one total internal reflection member that extends longitudinally in relation to the guide member and which diverges the light incident on said total internal reflection member, homogeneously lighting the guide member, and said guide member lighting the control pad internally or externally.

As a result, a simple and compact illuminable control device is obtained and which lights the control pad homogeneously. In addition, thanks to the design of the guide member, the necessary lighting means are reduced and simplified, and the illuminable control device made easier to assemble/disassemble.

These and other advantages and characteristics of the invention will be made evident in the light of the drawings and the detailed description thereof.

### DESCRIPTION OF THE DRAWINGS

Figure 1 shows a three-dimensional view of a first embodiment of an illuminable control device according to the invention, which comprises lighting means and guide means for the lighting.
Figure 2 shows a three-dimensional view of the illuminable control device shown in

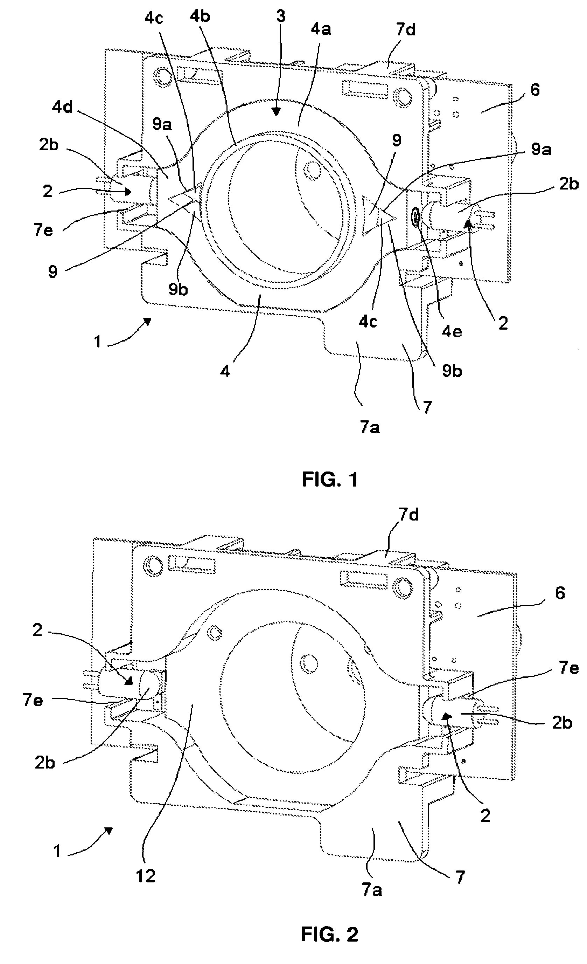

Figure 1, without the guide means for the lighting.

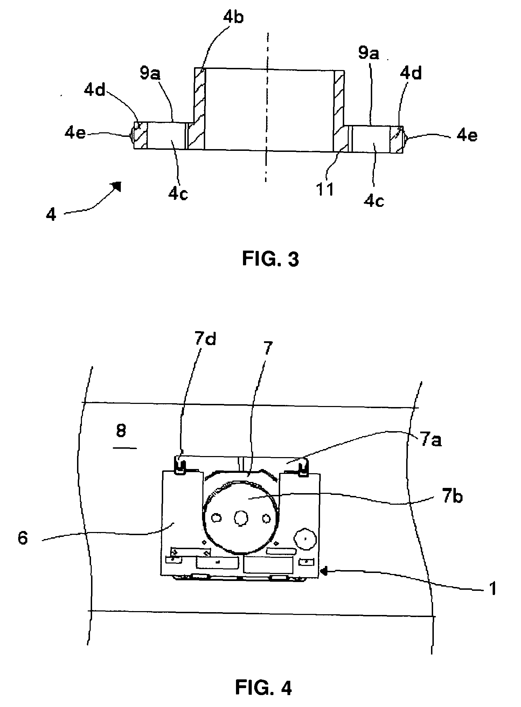

Figure 3 shows a longitudinal section of the guide means for the lighting of the illuminable control device shown in Figure 1.
Figure 4 shows a rear view of the illuminable control device shown in Figure 1 assembled on a control panel.

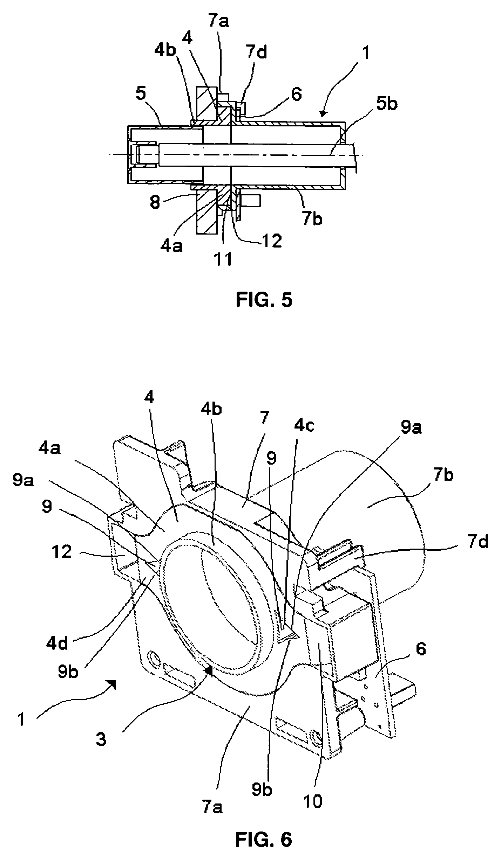

Figure 5 shows a longitudinal section of the illuminable control device shown in
Figure 1, assembled on a control panel.
Figure 6 shows a three-dimensional view of a second embodiment of the illuminable control device according to the invention, which comprises lighting means and guide means for the lighting.

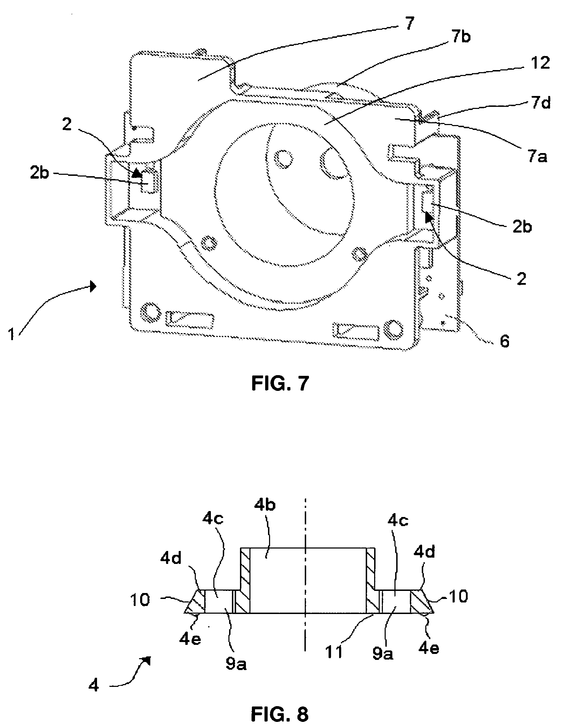

Figure 7 shows a three-dimensional view of the illuminable control device shown in
Figure 6, without the guide means for the lighting.
Figure 8 shows a longitudinal section of the guide means of the illuminable control device shown in Figure 6.

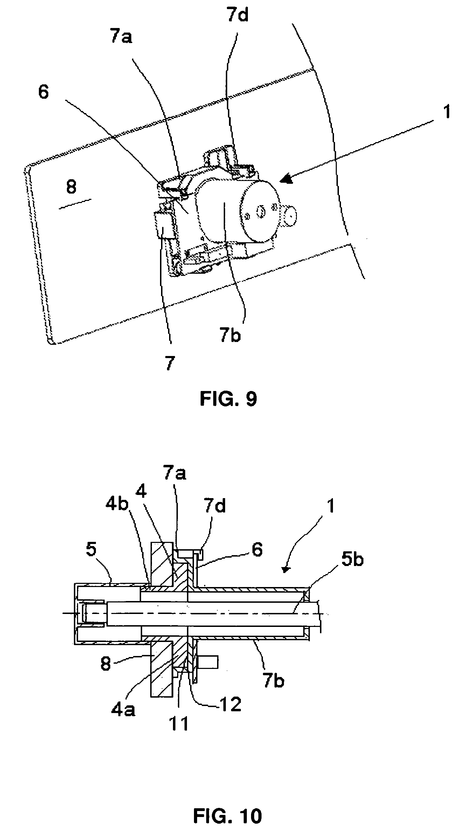

Figure 9 shows a three-dimensional view of the illuminable control device shown in
Figure 6, assembled on a control panel.
Figure 10 shows a longitudinal section of a third embodiment of the illuminable control device shown in Figure 1, assembled on a control panel.

### DETAILED DISCLOSURE OF THE INVENTION

Figures 1 to 10 show different embodiments of an illuminable control device 1 adapted to a control panel 8 of a domestic appliance according to the invention. The illuminable control device 1 comprises lighting means 2 to light a substantially cylindrical, manual and rotating control pad 5, shown in Figures 4, 9 and 10, comprised in the control panel 8, guide means 3 to guide the light emitted by the lighting means 2 towards the control pad 5, and a printed circuit board 6 in which are arranged connected the corresponding lighting means 2.

The lighting means 2 comprise at least one light source 2b, the light source 2b preferably being a LED. In the embodiments shown in the Figures, the lighting means 2 comprise two LED's 2b arranged diagonally opposed, external to the guide means 3 and the control pad 5 itself.

On the other hand, the guide means 3 comprise a guide member 4, arranged concentrically to the control pad 5, which as well as guiding the light keeps the control pad 5 centred and guided.

The guide member 4, shown in detail in Figures 3 to 7, is a substantially cylindrical and hollow member, made of a translucent material, which comprises a substantially cylindrical base 4a that has a support surface 11 and a substantially cylindrical and hollow projection 4b, that extends axially continuously from the base 4a and which passes through the control panel 8 lighting the control pad 5 externally, as shown in Figure 4, or internally as shown in Figure 10. The guide member 4 also comprises substantially prismatic extensions 4d that extend continuously and radially from the base 4a, coplanar to the support surface 11 of the base 4a, the extensions 4d being arranged diametrically opposed.

Furthermore, the guide member 4 includes at least one total internal reflection member 9, known as a TIR member, associated to each LED 2b, which completely reflects the light that is incident on said TIR member 9. In the embodiments shown in Figures 1 to 10, the guide member 4 includes two TIR members 9, arranged substantially concentric to the guide member 4 and diametrically opposed to each other, although in other embodiments the guide member 4 may comprise a smaller or larger number of TIR members 9, with the aim of achieving uniform lighting throughout the guide member 4. Each TIR member 9 comprises total reflection surfaces 9a, 9b, which are curved and continuous to each other. The total reflection surfaces 9a, 9b are substantially symmetrical and extend longitudinally in relation to the guide member 4.

Furthermore, each TIR member 9 is configured as a hollow 4c between the base 4a and the corresponding extension 4d, each hollow 4c passing longitudinally through the base 4a and the corresponding extension 4d, each TIR member 9 and therefore each hollow 4c being arranged symmetrically aligned with the corresponding extension 4d. Each hollow 4c is delimited at least by the total reflection surfaces 9a, 9b of the corresponding TIR member 9.

The guide means 3 also comprise a lens 4e associated to each LED 2b, the lens 4e being integrated in the guide member 4, arranged in the corresponding extension 4d, projecting out in relation to said extension 4d. The lens 4e and the corresponding LED 2b are arranged substantially aligned, with the result that the light emitted by the corresponding LED 2b is captured and concentrated by the lens 4e. The shape and operating mode of the lenses 4e are known in the prior art and are thus not described.

The illuminable control device 1 also comprises a support 7 that houses the LEDs 2b and, at least partially, the guide member 4, and by means of which the illuminable control device 1 is fixed to the control panel 8. The support 7 is arranged along with the guide member 4 and the LEDs 2b inside the domestic appliance, with the LEDs 2b not being visible from the exterior of the control panel 8, as shown in Figures 5 and 10 corresponding to different embodiments of the illuminable control device 1.

The support 7 comprises a substantially rectangular base 7a through which it is fixed to the control panel 8 by means of any known fixing means, and a substantially cylindrical elongated member 7b, inside which is partially housed the axis 5b of the control pad 5 and on the exterior of which is assembled the printed circuit board 6. The base 7a includes a cavity 12, shown in Figures 2 and 7, with a shape substantially similar to the guide member 4, in which are housed the lighting means 2 and said guide member 4. Once the guide member 4 has been assembled on the support 7, the base 4a and the extensions 4d of the guide member 4 do not project out in relation to the base 7a of the support 7.

The support 7 also comprises tabs 7d, which can be seen in Figures 1, 2, 4, 5, 6, 7, 9 and 10, which extend from the base 7a longitudinally, in the direction of the elongated member 7b, by means of which the printed circuit board 6 is held fixed to the support 7. The illuminable control device 1 is easy to assemble and easy to maintain, mainly because of the ease with which the various components can be assembled and disassembled.

In a first embodiment of the invention shown in Figures 1 to 5, the lighting means 2 comprise two conventional LEDs 2b, arranged orthogonal to the control pad 5, external to the control pad 5, and diagonally opposed in relation to said control pad 5.

Figure 3 shows in detail the guide member 4, wherein the projection 4b has an internal diameter greater than the external diameter of the control pad 5, as shown in Figure 5, with the result that the guide member 4 lights the control pad 5 externally.

In addition, each LED 2b is arranged symmetrically aligned in relation to the corresponding TIR member 9, each LED 2b being arranged inserted at least partially in the support 7, in particular in grooves 7e included in the base 7a.

Furthermore, each lens 4e is arranged on the free end of the corresponding extension 4b, arranged symmetrically aligned with the corresponding TIR member 9. Additionally, each corresponding LED 2b is arranged aligned with said corresponding lens 4e. As a result, when the control pad 5 has to be lit in order to be seen correctly, a control mechanism not shown in the figures sends the order to activate the LED's 2b, the light being captured and concentrated by the corresponding lens 4e, directed towards the corresponding TIR member 9 through the corresponding extension 4d, and diverged and reflected totally by each TIR member 9. The light emitted by each LED 2b thus lights homogeneously at least half of the guide member 4, with the result that with the two LED's 2b arranged diametrically opposed and the corresponding TIR member 9 the control pad 5 may be lit externally in a homogeneous manner.

In a second embodiment of the invention shown in Figures 6 to 9, the light sources 2b are arranged substantially parallel to the axial axis 5b of the control pad 5, external to the control pad 5, and diagonally opposed in relation to said control pad 5.

Figure 8 shows in detail the guide member 4, the projection 4b of which has an internal diameter greater than the external diameter of the control pad 5, with the result that, as in the preceding embodiment, the guide member 4 lights the exterior of the control pad 5.

In addition, in this second embodiment, each lens 4e is integrated in the corresponding extension 4d, projecting out towards the exterior in the axial direction, from the support surface 11 of the guide member 4 on the base 7a of the support 7.

Additionally, in this second embodiment the light sources 2b are preferably SMD LEDs, in other words known light-emitting diodes with an assembly surface, shown in Figure 7, which are housed diametrically opposed in the cavity 12 of the support 7, being fixed in a simple and quick manner to the printed circuit board 6.

Each lens 4e is thus arranged aligned with the corresponding LED SMD 2b and substantially orthogonal to the corresponding TIR member 9. The guide member 4 also includes auxiliary reflection surfaces 10, each auxiliary reflection surface 10 being an inclined surface that shortens a free end of the corresponding extension 4d. Each auxiliary reflection surface 10 is arranged facing the corresponding lens 4e. As a result, when the control pad 5 has to be lit in order to be seen correctly, a control mechanism not shown in the figures sends the order to activate the corresponding SMD LEDs 2b. The light is first of all captured and concentrated by the corresponding lens 4e and subsequently directed towards the corresponding auxiliary reflection surface 10, which totally reflects said light, directing it towards the corresponding TIR member 9. The corresponding TIR member 9 reflects said light totally once more, diverging it and directing it homogeneously at half of the base 4a and, as a result, at the projection 4b of the guide member 4, thereby lighting, by means of two SMD LEDS 2b arranged diametrically opposed, the control pad 5 externally.

The guide member 4 of the embodiments described above is made of a translucent material, preferably polypropylene injected in a single piece. Additionally, the support 7 and the control pad 5 are made of a preferably opaque plastic material. Different control pad 5 lighting colours may be obtained by adding different colouring pigments to the material of the guide member 4, which modify the tone and the colour of the lit guide member 4.

Furthermore, although in the aforementioned embodiments the projection 4b of the guide member 4 is substantially cylindrical, in other embodiments it may have another shape, with the result that the user may see a lit outline of the lit control pad 5 that is not circular.

Although in the embodiments described above the illuminable control device 1 lights the exterior of the control pad 5, in other embodiments such as the one shown in Figure 10, the illuminable control device 1 may light the inside of the control pad 5. Thus, in the embodiment shown in Figure 10, the projection 4b of the guide member 4 has an external diameter smaller than the internal diameter of the control pad 5, with the result that when they are assembled the projection 4b is arranged inserted in the inside of the control pad 5, and said control pad 5 is made, at least partially, of a translucent material. As a result, the illuminable control device 1 lights internally either the entire control pad 5, in the event that the entire control pad 5 is translucent, or the side walls or the front wall of said control pad 5.

## Claims

1. Illuminable control device adapted to a control panel for a domestic appliance, the control panel (8) comprising at least one rotating control pad (5), and the illuminable control device (1) comprising lighting means (2) that comprise at least one light source (2b) to light the control pad (5) and guide means (3) for guiding the light emitted by the lighting means (2) towards the control pad (5), the guide means (3) comprising a guide member (4) that includes at least one total internal reflection member (9) that extends longitudinally in relation to the guide member (4) and which diverges the light incident on said total internal reflection member (9), **characterised in that** the guide member (4) further comprises at least one lens (4e) arranged facing and aligned with the corresponding light source (2b), concentrating the light emitted by said light source (2b), homogeneously lighting the guide member (4), and said guide member (4) lighting the control pad (5) internally or externally.

2. Illuminable control device according to the preceding claim, wherein the guide member (4) comprises a total internal reflection member (9) associated to each light source (2b).

3. Illuminable control device according to any of the preceding claims, wherein the total internal reflection member (9) is configured as a hollow (4c) that passes through the guide member (4).

4. Illuminable control device according to the preceding claim, wherein the total internal reflection member (9) comprises substantially symmetrical total reflection surfaces (9a, 9b) that extend longitudinally to the guide member (4) and which delimit the hollow (4c).

5. Illuminable control device according to the preceding claim, wherein the total reflection surfaces (9a, 9b) are curved surfaces.

6. Illuminable control device according to any of the preceding claims, wherein the guide member (4) comprises a base (4a), a projection (4b) that extends continuously from the base (4a), arranged concentrically to the control pad (5) and which passes through the control panel (8) to light the control pad (5), and at least one extension (4d) that extends radially continuous to the base (4a), the corresponding light source (2b) being arranged facing the extension (4d) and the total internal reflection member (9) being arranged between the base (4a) and the corresponding extension (4d).

7. Illuminable control device according to any of the preceding claims, wherein the light source (2b) is arranged symmetrically aligned with the total internal reflection member (9).

8. Illuminable control device according to the preceding claim, wherein the light source (2b) is an LED.

9. Illuminable control device according to any of claims 1 to 6, wherein the light source (2b) is arranged substantially parallel to the axial axis (5b) of the remote control (5).

10. Illuminable control device according to the preceding claim, wherein the light source (2b) is an SMD LED.

11. Illuminable control device according to either of claims 9 or 10, wherein the guide member (4) comprises at least one additional total reflection surface (10) arranged facing the corresponding light source (2b).

12. Illuminable control device according to the preceding claim, wherein the reflection surface (10) is an inclined surface that totally reflects the incident light towards the corresponding total reflection member (9).

13. Illuminable control device according to any of the preceding claims, wherein the lighting means (3) are arranged external to the control pad (5).

14. Illuminable control device according to any of the preceding claims, wherein it comprises two light sources (2b) arranged diagonally opposed, wherein the guide member (4) comprises two lenses (4e) arranged diametrically opposed, each one of which is arranged facing and substantially aligned with the corresponding light source (2b), and two total internal reflection members (9) arranged diagonally opposed and associated, respectively, to the respective light source (2b).

15. Illuminable control device according to any of the preceding claims, wherein the guide member (4) is made of a translucent material.

## Patentansprüche

1. Aufhellbare Bedienvorrichtung, die an ein Bedienteil für ein Haushaltsgerät angepasst ist, wobei das Bedienteil (8) mindestens ein drehbares Bedienfeld (5) umfasst, und die aufhellbare Bedienvorrichtung (1) Beleuchtungsmittel (2), die mindestens eine Lichtquelle (2b) umfassen, um das Bedienfeld (5) zu beleuchten, und Leitmittel (3), um das Licht, das von den Beleuchtungsmitteln (2) emittiert wird, in Richtung auf das Bedienfeld (5) zu leiten, umfasst, wobei die Leitmittel (3) ein Leitelement (4) umfassen, das mindestens ein Totalreflexionselement (9) umfasst, das sich mit Bezug auf das Leitelement (4) in Längsrichtung erstreckt und das Licht, das auf das Totalreflexionselement (9) einfällt, ablenkt, **dadurch gekennzeichnet, dass** das Leitelement (4) ferner mindestens eine Linse (4e) umfasst, die angeordnet ist, um der entsprechenden Lichtquelle (2b) zugewandt und auf diese ausgerichtet zu sein, wobei sie das Licht konzentriert, das von der Lichtquelle (2b) emittiert wird und das Leitelement (4) einheitlich beleuchtet, und wobei das Leitelement (4) das Bedienfeld (5) intern oder extern beleuchtet.

2. Aufhellbare Bedienvorrichtung nach dem vorhergehenden Anspruch, wobei das Leitelement (4) ein Totalreflexionselement (9) umfasst, das mit jeder Lichtquelle (2b) verknüpft ist.

3. Aufhellbare Bedienvorrichtung nach einem der vorhergehenden Ansprüche, wobei das Totalreflexionselement (9) als Hohlkörper (4c) konfiguriert ist, der durch das Leitelement (4) geht.

4. Aufhellbare Bedienvorrichtung nach dem vorhergehenden Anspruch, wobei das Totalreflexionselement (9) im Wesentlichen symmetrische Totalreflexionsflächen (9a, 9b) umfasst, die sich in Längsrichtung zu dem Leitelement (4) erstrecken und den Hohlkörper (4c) begrenzen.

5. Aufhellbare Bedienvorrichtung nach dem vorhergehenden Anspruch, wobei die Totalreflexionsflächen (9a, 9b) gekrümmte Oberflächen sind.

6. Aufhellbare Bedienvorrichtung nach einem der vorhergehenden Ansprüche, wobei das Leitelement (4) eine Basis (4a), einen Vorsprung (4b), der sich durchgehend von der Basis (4a) aus erstreckt und zu dem Bedienfeld (5) konzentrisch angeordnet ist und durch das Bedienteil (8) geht, um das Bedienfeld (5) zu beleuchten, und mindestens eine Verlängerung (4d), die sich radial durchgehend bis zu der Basis (4a) erstreckt, umfasst, wobei die entsprechende Lichtquelle (2b) der Verlängerung (4d) zugewandt angeordnet ist und das Totalreflexionselement (9) zwischen der Basis (4a) und der entsprechenden Verlängerung (4d) angeordnet ist.

7. Aufhellbare Bedienvorrichtung nach einem der vorhergehenden Ansprüche, wobei die Lichtquelle (2b) symmetrisch auf das Totalreflexionselement (9) ausgerichtet angeordnet ist.

8. Aufhellbare Bedienvorrichtung nach dem vorhergehenden Anspruch, wobei die Lichtquelle (2b) eine LED ist.

9. Aufhellbare Bedienvorrichtung nach einem der Ansprüche 1 bis 6, wobei die Lichtquelle (2b) im Wesentlichen parallel zur axialen Achse (5b) der Fernbedienung (5) angeordnet ist.

10. Aufhellbare Bedienvorrichtung nach dem vorhergehenden Anspruch, wobei die Lichtquelle (2b) eine SMD-LED ist.

11. Aufhellbare Bedienvorrichtung nach einem der Ansprüche 9 oder 10, wobei das Leitelement (4) mindestens eine zusätzliche Totalreflexionsfläche (10) umfasst, die der entsprechenden Lichtquelle (2b) zugewandt angeordnet ist.

12. Aufhellbare Bedienvorrichtung nach dem vorhergehenden Anspruch, wobei die Reflexionsfläche (10) eine schräge Oberfläche ist, die das einfallende Licht in Richtung auf das entsprechende Totalreflexionselement (9) vollständig reflektiert.

13. Aufhellbare Bedienvorrichtung nach einem der vorhergehenden Ansprüche, wobei die Beleuchtungsmittel (3) extern zu dem Bedienfeld (5) angeordnet sind.

14. Aufhellbare Bedienvorrichtung nach einem der vorhergehenden Ansprüche, wobei sie zwei Lichtquellen (2b) umfasst, die diagonal gegenüberliegend angeordnet sind, wobei das Leitelement (4) zwei Linsen (4e), die diametral gegenüberliegend angeordnet sind, wobei jede davon der entsprechenden Lichtquelle (2b) zugewandt und im Wesentlichen darauf ausgerichtet angeordnet ist, und zwei Totalreflexionselemente (9), die diagonal gegenüberliegend angeordnet sind und jeweils mit der jeweiligen Lichtquelle (2b) verknüpft sind, umfasst.

15. Aufhellbare Bedienvorrichtung nach einem der vorhergehenden Ansprüche, wobei das Leitelement (4) aus einem durchscheinenden Material besteht.

## Revendications

1. Dispositif de commande éclairable adapté à un panneau de commande destiné à un appareil ménager, le panneau de commande (8) comprenant au moins un pavé de commande rotatif (5), et le dispositif de commande éclairable (1) comprenant un moyen d'éclairage (2) qui comprend au moins une source de lumière (2b) destinée à éclairer le pavé de commande (5) et un moyen de guidage (3) destiné à guider la lumière émise par le moyen d'éclairage (2) vers le pavé de commande (5), le moyen de guidage (3) comprenant un élément de guidage (4) qui comprend au moins un élément de réflexion totale interne (9) qui s'étend longitudinalement par rapport à l'élément de guidage (4) et qui diverge la lumière incidente sur ledit élément de réflexion totale interne (9), **caractérisé en ce que** l'élément de guidage (4) comprend en outre au moins une lentille (4e) prévue face à et en alignement avec la source de lumière correspondante (2b), et qui concentre la lumière émise par ladite source de lumière (2b), et qui éclaire de manière homogène l'élément de guidage (4), ledit élément de guidage (4) éclairant le pavé de commande (5) en interne ou en externe.

2. Dispositif de commande éclairable selon la revendication précédente, dans lequel l'élément de guidage (4) comprend un élément de réflexion totale interne (9) associé à chaque source de lumière (2b).

3. Dispositif de commande éclairable selon l'une quelconque des revendications précédentes, dans lequel l'élément de réflexion totale interne (9) est configuré comme un creux (4c) qui passe par l'élément de guidage (4).

4. Dispositif de commande éclairable selon la revendication précédente, dans lequel l'élément de réflexion totale interne (9) comprend des surfaces de réflexion totale sensiblement symétriques (9a, 9b) qui s'étendent longitudinalement vers l'élément de guidage (4) et qui délimitent le creux (4c).

5. Dispositif de commande éclairable selon la revendication précédente, dans lequel les surfaces de réflexion totale (9a, 9b) sont des surfaces incurvées.

6. Dispositif de commande éclairable selon l'une quelconque des revendications précédentes, dans lequel l'élément de guidage (4) comprend une base (4a), une projection (4b) qui s'étend en continu depuis la base (4a), prévue de manière concentrique par rapport au pavé de commande (5) et qui passe par le pavé de commande (8) afin d'éclairer le pavé de commande (5), et au moins une extension (4d) qui s'étend de manière radialement continue par rapport à la base (4a), la source de lumière correspondante (2b) étant prévue face à l'extension (4d) et l'(élément de réflexion totale interne (9) étant disposé entre la base (4a) et l'extension correspondante (4d).

7. Dispositif de commande éclairable selon l'une quelconque des revendications précédentes, dans lequel la source de lumière (2b) est prévue en étant symétriquement alignée avec l'élément de réflexion totale interne (9).

8. Dispositif de commande éclairable selon la revendication précédente, dans lequel la source de lumière (2b) est une LED.

9. Dispositif de commande éclairable selon l'une quelconque des revendications 1 à 6, dans lequel la source de lumière (2b) est prévue de manière sensiblement parallèle à l'axe axial (5b) de la commande à distance (5).

10. Dispositif de commande éclairable selon la revendication précédente, dans lequel la source de lumière (2b) est une LED SMD.

11. Dispositif de commande éclairable selon l'une des revendications 9 ou 10, dans lequel l'élément de guidage (4) comprend au moins une surface de réflexion totale supplémentaire (10) placée face à la source de lumière correspondante (2b).

12. Dispositif de commande éclairable selon la revendication précédente, dans lequel la surface de réflexion (10) est une surface inclinée qui réfléchit totalement la lumière incidente vers l'élément de réflexion totale correspondant (9).

13. Dispositif de commande éclairable selon l'une quelconque des revendications précédentes, dans lequel le moyen d'éclairage (3) est prévu de manière externe au pavé de commande (5).

14. Dispositif de commande éclairable selon l'une quelconque des revendications précédentes, qui comprend deux sources de lumière (2b) prévues de manière diagonalement opposée, dans lequel l'élément de guidage (4) comprend deux lentilles (4e) prévues de manière diamétralement opposée, qui sont chacune prévues face à et de manière sensiblement alignée avec la source de lumière correspondante (2b), et deux éléments de réflexion totale internes (9) prévus de manière diagonalement opposée et associés, respectivement, à la source de lumière respective (2b).

15. Dispositif de commande éclairable selon l'une quelconque des revendications précédentes, dans lequel l'élément de guidage (4) est composé d'un matériau translucide.
